(19) Europäisches Patentamt
European Patent Office
Office européen des brevets

(11) **EP 1 880 788 B1**

(12) **EUROPÄISCHE PATENTSCHRIFT**

(45) Veröffentlichungstag und Bekanntmachung des Hinweises auf die Patenterteilung:
**07.09.2011   Patentblatt 2011/36**

(51) Int Cl.:
*B23K 9/09* (2006.01)     *H02M 7/48* (2007.01)

(21) Anmeldenummer: **07109181.3**

(22) Anmeldetag: **30.05.2007**

(54) **Lichtbogenschweißgerät**

Light arc welding device

Appareil de soudure à arc électrique

(84) Benannte Vertragsstaaten:
**DE FR GB IT**

(30) Priorität: **21.07.2006   DE 102006034330**

(43) Veröffentlichungstag der Anmeldung:
**23.01.2008   Patentblatt 2008/04**

(73) Patentinhaber: **EWM Hightec Welding GmbH**
**56271 Mündersbach (DE)**

(72) Erfinder: **Szczesny, Michael**
**56235 Ransbach-Baumbach (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**EP-A- 1 142 665     JP-A- 60 137 582**
**US-A- 5 416 299     US-A- 5 670 071**

EP 1 880 788 B1

**Beschreibung**

Die Erfindung betrifft ein Lichtbogenschweißgerät gemäß dem Oberbegriff des Anspruchs 1, welches insbesondere zum WIG (Wolfram-Inertgas) Schweißen mit Gleich- und/oder Wechselstrom geeignet ist.

Aus der DE 40 23 419 C2 ist ein Lichtbogenschweißgerät mit einem netzspannungsgespeisten Gleichrichter, einem primärseitig getakteten Stromwandler und einem sekundärseitig ansteuerbaren Wechselrichter bekannt, welches einen Stromregelkreis enthält, dem der Strom-Istwert zugeführt wird und welcher über eine Impulsbreitensteuerschaltung auf die primärseitige Steuereinrichtung des Stromwandlers einwirkt. Bei dieser Vorrichtung wird der Stromverlauf, der in den Schweißprozeß fließt, durch einen sekundärseitigen Wechselrichter derart beeinflußt, dass sowohl das Periodenverhältnis (Balance) als auch die Frequenz des Schweißwechselstromes variierbar sind.

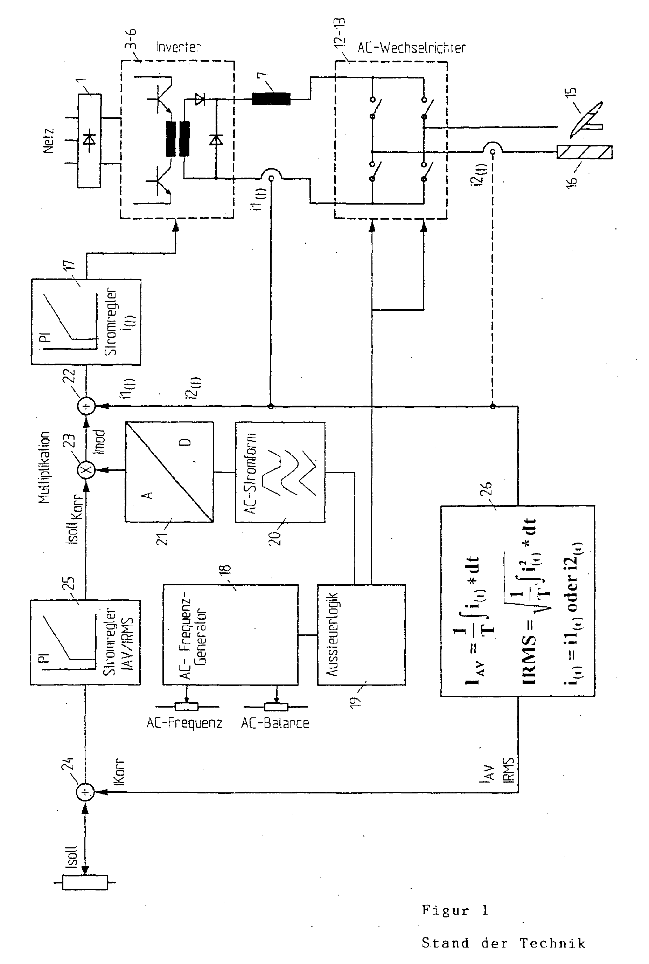

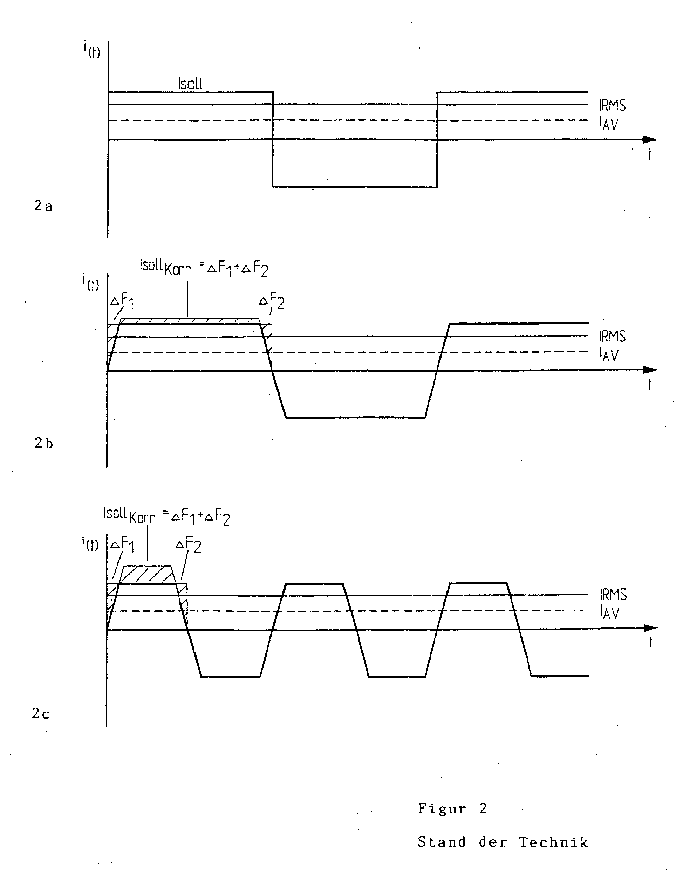

Ein Lichtbogenschweißgerät der erfindungsgemäßen Gattung ist aus der EP 1 142 665 B1 bekannt. Bei diesem bekannten Lichtbogenschweißgerät wird über einen Gleichrichter die von einem beispielsweise dreiphasigen Netz entnommene Netzspannung gleichgerichtet und über einen Zwischenkreis auf eine primärseitige Steuereinrichtung geführt, welche die Primärwicklung eines Stromwandlers taktet. Sekundärseitig des Stromwandlers ist ein Gleichrichter angeordnet, in dem die sekundärseitige Schweißspannung gleichgerichtet wird und über eine Glättungsdrossel geglättet wird. Nachgeordnet ist ein Wechselrichter vorgesehen, an dessen Ausgang der Schweißprozeß angeschlossen ist. Diese bekannte Schaltung weist zudem eine Strom-Sollwert-Korrektureinrichtung auf, durch die erreicht wird, dass das Lichtbogenschweißgerät mit einer der eigentlichen Schweißstromregelung überlagerten frequenzunabhängigen Schweißstrommittelwertregelung ausgebildet ist. Dies wird dadurch realisiert, dass diejenigen Flächenbereiche, die aufgrund der endlichen Flankensteilheit vom idealen Rechteckverlauf abweichen, durch die Strom-Sollwert-Korrektureinrichtung dahingehend ergänzt werden, dass der verlorene "Flächeninhalt" durch die Aufsattelung desselben auf die waagerechten Stromprofilverläufe ergänzt wird. Insgesamt ergibt sich damit auch beim abgerundeten Stromverlauf ein Flächenintegral, welches dem Rechteckverlauf mit der Amplitude des Sollwertes entspricht. Die Amplitude des zeitlichen Stromverlaufs wird also solange korrigiert, bis der Mittelwert des Stroms dem vorgegebenen Sollwert entspricht, und zwar jeweils unabhängig von Frequenz und Kurvenform. Durch diese Lösung lässt sich eine Stromregelung erreichen, bei der bei Änderungen in Frequenz und/oder Puls-/Pausenverhältnis ("Wechselstrom-Balance") des Stromes gleichwohl ein konstanter Strommittelwert erreicht wird (siehe auch Figuren 1 und 2).

Der Erfindung liegt davon ausgehend die Aufgabe zugrunde, eine Vorrichtung bzw. ein Verfahren zum WIG-Wechselstromschweißen dahin weiter zu entwickeln, dass sich eine erhöhte Flexibilität bei der Einstellung der Schweißstromparameter ergibt, ohne dass die Vorteile der Regelbarkeit auf konstanten Strommittelwert hin verloren gehen.

Diese Aufgabe wird durch ein Lichtbogenschweißgerät mit den Merkmalen des Anspruchs 1 gelöst. Bei einem Verfahren zum Betreiben eines Lichtbogenschweißgerätes wird diese Aufgabe durch die Merkmale des Anspruchs 12 gelöst.

Die Erfindung zeichnet sich dadurch aus, dass zusätzlich zu der aus dem Stand der Technik bekannten Einstellbarkeit auch die Funktionalität einer sog. "Amplitudenbalance" ermöglicht wird. In bestimmten Anwendungsfällen, z.B. beim WIG-Wechselstromschweißen, ist es wünschenswert, dass nicht nur die Wechselstromfrequenz und/oder das Puls-/Pausenverhältnis ("Wechselstrom-Balance") entsprechend dem Anwendungsfall optimiert werden, sondern auch eine sogenannte "Amplituden-Balance" vorgenommen wird. Hierunter ist ein vorgebbarer positiver oder negativer Offset auf die Stromamplitude innerhalb einer Halbwelle zu verstehen, welcher in der nachfolgenden Halbwelle wieder auszugleichen ist. Diese Beaufschlagung mit dem Amplituden-Offset kann dabei vorteilhafter Weise unabhängig von der jeweils gewünschten Frequenz und auch unabhängig von der eingestellten Wechselstrombalance stattfinden. Es werden also in aufeinander folgenden Halbwellen jeweils zueinander inverse Korrekturbeträge zum Stromverlauf hinzuaddiert. Die erfindungsgemäße Lösung zeichnet dadurch aus, dass unabhängig von der eingestellten "Amplitudenbalance" der Mittelwert des Stromes konstant geregelt wird.

Eine vorteilhafte Gestaltung der Erfindung sieht vor, dass der Sollwert durch die erste Korrekturgröße um ein solches Maß angehoben wird, dass das Flächenintegral des Strom-Sollwertprofils mit demjenigen eines Rechteckstromverlaufs in Übereinstimmung gebracht wird, dessen Amplitude dem Sollwert entspricht.

Eine weitere vorteilhafte Gestaltung der Erfindung sieht vor, dass die erste Korrekturgröße aus einem Regelkreis erzeugt wird, der als Sollwertvorgabe den Sollwert des Schweißstromes und als Istwert den mit einem Mittelwertbildner erzeugten Mittelwert des Schweißstromes erhält.

Eine andere vorteilhafte Gestaltung der Erfindung sieht vor, dass der Mittelwertbildner den arithmetischen Mittelwert IAV des Schweißstromes bildet. Alternativ dazu ist vorgesehen, dass der Mittelwertbildner den quadratischen Mittelwert des Schweißstromes IRMS bildet.

Eine weitere vorteilhafte Gestaltung der Erfindung sieht vor, dass als Eingangssignal des Mittelwertbildners der Schweißstrom vor dem Wechselrichter anliegt und/oder dass als Eingangssignal des Strommittelwertbildners der Schweißstrom hinter dem Wechselrichter anliegt.

Eine weitere vorteilhafte Gestaltung der Erfindung sieht vor, dass mittels der Stromformvorgabeschaltung die Frequenz und/oder die Balance des wechselstromförmigen Schweißstrom-Sollwertes vorgebbar ist.

Bei einer bevorzugten Ausführungsform der Erfindung ist vorgesehen, dass zur Erzeugung der zweiten Korrekturgröße ($+\Delta I_P$; $-\Delta I_M$) ein Funktionsgenerator vorgesehen ist, welcher in Abhängigkeit von dem vorgewählten Korrekturbetrag ("Amplituden-Balance") den beiden Halbwellen des Stromverlaufs vorzeichenrichtig zugeordnet die zweite Korrekturgröße liefert.

Bei einer Variante dieser vorteilhaften Ausführungsform der Erfindung ist vorgesehen, dass das Steuersignal des Funktionsgenerators zur vorzeichenrichtigen Zuordnung der zweiten Korrekturgröße ($+\Delta I_P$; $-\Delta I_M$) die mit dem Ansteuersignal des Wechselrichters synchronisiert werden.

Bei einer weiteren vorteilhaften Ausführungsform der Erfindung ist schließlich vorgesehen, dass das Ausgangssignal des Funktionsgenerators zur Erzeugung der zweiten Korrekturgröße ($+\Delta I_P$; $-\Delta I_M$) auf einen Summationspunkt des Stromregelkreises gegeben wird, an welchem auch die erste Korrekturgröße ($\Delta F_1 + \Delta F_2$) anliegt.

Die Erfindung wird im folgenden anhand eines Ausführungsbeispiels wie in den Zeichnungen dargestellt näher erläutert. Dabei zeigen

Fig. 1 den schaltungstechnischen Aufbau eines Lichtbogenschweißgerätes, wie es aus dem Stand der Technik bekannt ist,

Fig. 2 zeitliche Stromverläufe zur Erläuterung der Funktionsweise des Lichtbogenschweißgerätes nach Figur 1,

Fig. 3 den schaltungstechnischen Aufbau eines Lichtbogenschweißgerätes gemäß Ausführungsbeispiel der Erfindung und

Fig. 4 zeitliche Stromverläufe zur Erläuterung der Funktionsweise des erfindungsgemäßen Gerätes nach Figur 3.

Fig. 1 zeigt die Anordnung eines Lichtbogenschweißgerätes, wie es aus dem Stand der Technik bekannt ist. Im oberen linken Teil der Figur ist der grundsätzliche Aufbau eines Lichtbogenschweißgerätes bestehend aus einem Gleichrichter 1, der die von einem beispielsweise dreiphasigen Netz entnommene Netzspannung gleichgerichtet und über einen Zwischenkreis auf eine primärseitige Steuereinrichtung 3-6 führt, welche die Primärwicklung eines Stromwandlers taktet. Sekundärseitig des Stromwandlers ist ein Gleichrichter angeordnet, in dem die sekundärseitige Schweißspannung gleichgerichtet wird und über eine Glättungsdrossel 7 geglättet wird. Nachgeordnet ist ein Wechselrichter 12-13 vorgesehen, welcher aus beispielsweise vier steuerbaren Schaltern besteht, die in Brückenschaltung angeordnet sind. Am Ausgang des Wechselrichters ist der Schweißprozeß 15,16 angeschlossen. Darüber hinaus ist ein Stromregelkreis vorgesehen, welcher als Eingangsgrößen entweder den Schweißstrom i1(t) und/oder den Schweißstrom i2(t) erhält, und der über einen Stromregler (PI-Regler) 17 auf die primärseitige Steuereinrichtung einwirkt. Am Summationspunkt 22 vor dem Stromregler 17 wird der Strom-Istwert $i_1(t)$ bzw. $i_2(t)$ mit einem modifizierten Strom-Sollwert $I_{mod}$ verglichen, welcher von einem Strom-Sollwertgeber $I_{soll}$ stammt. Der ursprünglich vom Strom-Sollwertgeber $I_{soll}$ für die Amplitude des Stroms vorgegebene Wert wird zunächst an einem Summationspunkt 24 in einer noch zu beschreibenden Weise mit einem Korrekturwert $I_{Korr}$ verknüpft und ferner an einem Multiplikationspunkt 23 mit einem aus einer Stromformvorgabeschaltung 18, 19, 20, 21 gewonnenen Wert multipliziert, so dass sich der modifizierte Sollwert $I_{mod}$ ergibt.

Die Stromformvorgabeschaltung besteht aus einem Frequenzgenerator 18, mit dem sowohl die Wechselstromfrequenz als auch die Wechselstrombalance, d.h. das Verhältnis aus der Breite der positiven Anteile zur Breite der negativen Anteile eines Rechtecksignals, vorgebbar sind. Das am Ausgang des Frequenzgenerators 18 generierte Rechtecksignal wird über eine Aussteuerlogik 19 sowohl auf den sekundärseitigen Wechselrichter 12, 13 als auch auf eine Kurvenverlaufsformschaltung 20 gegeben, an deren Ausgang das zeitliche Profil des vorgegebenen Stromverlaufs festliegt. Es kann sich bei der von der Schaltung 20 erzeugten Kurvenform um einen zeitlichen Stromverlauf handeln, welcher z.B. trapezförmig, sinusförmig oder dreieckförmig ist, wobei sowohl Frequenz als auch Balance dieses Stromverlaufs variabel, d.h. durch die Schaltung 18 einstellbar, sind. Das in der Schaltung 20 erzeugte Signal wird im Wandler 21 digital/analog gewandelt und auf den Multiplikationspunkt 23 gegeben.

Der Strom-Sollwertgeber ist über den Summationspunkt 24 additiv mit einer Strom-Sollwert-Korrekturgröße $I_{Korr}$ verknüpft, welche in einer im folgenden dargestellten Weise gewonnen wird:

Aus dem Istwert des Schweißstromes, entweder vor ($i_1(t)$) oder nach ($i_2(t)$) dem Wechselrichter 12, 13 gemessen, wird über eine Strommittelwertbildnerschaltung 26 entweder der arithmetische Mittelwert IAV des Schweißstromes oder der Effektivwert IRMS des Schweißstromes gebildet.

Die Berechnung des arithmetischen Mittelwertes erfolgt nach der bekannten Formel IAV $= \dfrac{1}{T} \int i(t)\, dt$.

Der Effektivwert des Schweißstroms wird nach der bekannten Formel gebildet IRMS $= \sqrt{\dfrac{1}{T} \int i^2(t)\, dt}$.

Somit steht am Ausgang der Mittelwertbildnerschaltung 26 eine feste Größe IAV oder IRMS zur Verfügung, welche am Summationspunkt 24 zur Verknüpfung dieser Korrekturgröße $I_{Korr}$ mit dem Sollwert $I_{soll}$ vorliegt.

Die Funktionsweise eines solchen bekannten Lichtbogenschweißgerätes wird anhand der Stromverläufe in Fig. 2 nunmehr näher erläutert:

Die obere Abbildung in Fig. 2a zeigt den zeitlichen Verlauf des Schweißstromes für einen rechteckförmigen Stromverlauf. Die Amplitude des Stromverlaufs entspricht dem vom Sollwertgeber $I_{soll}$ vorgegebenen Wert. Bei dem in Fig. 2b dargestellten trapezförmigen Stromverlauf sind die Flankensteilheiten durch die Strom-Sollwertformschaltung 18, 19, 20 so gewählt, dass sich das gewünschte Verhalten des Lichtbogenschweißgerätes, z.B. hinsichtlich des Schweißverhaltens und der Geräusche, ergibt.

In der ersten Halbperiode des Stromverlaufs ist schraffiert diejenige Fläche eingezeichnet, um die sich der trapezförmige Stromverlauf vom Rechteckverlauf unterscheidet. Diese Flächenbereiche sind mit $\Delta F_1$ bzw. $\Delta F_2$ bezeichnet. Um diese Flächenbereiche ist der Mittelwert des Schweißstromes geringer als bei rechteckförmigem Stromverlauf.

Die Wirkungsweise der vorgesehenen Strom-Sollwert-Korrektureinrichtung bei einer Frequenzänderung wird aus einem Vergleich der Verläufe nach Fig. 2b und Fig. 2c ersichtlich: Durch die Korrekturschaltung wird die Amplitude des Schweißstromes angehoben, und zwar derart, dass die hinzugefügte Fläche genau den Flächenwerten $\Delta F_1 + \Delta F_2$ entspricht. Bei höherer Frequenz (Fig. 2c) ist dementsprechend eine größere Anhebung des Wertes $I_{soll_{Korr}}$ die Folge als bei niedriger Frequenz (Fig. 2b).

Die Festlegung der Höhe der "Aufsattelung" erfolgt in Anlehnung an den entweder arithmetisch berechneten bzw. meßtechnisch über den Istwert erfaßten Korrekturwert $I_{Korr}$.

Bei dieser Ausführungsform ist somit sichergestellt, dass das Lichtbogenschweißgerät mit einer der eigentlichen Schweißstromregelung überlagerten frequenzunabhängigen Schweißstrommittelwertregelung ausgebildet ist.

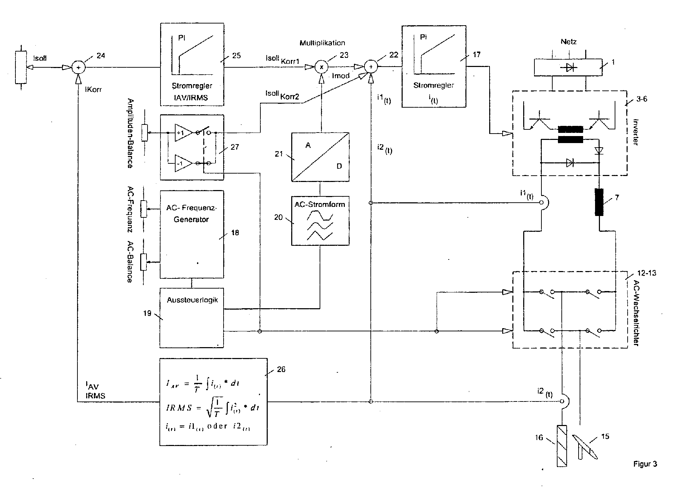

Die in Figur 3 dargestellte Ausführungsform der erfindungsgemäßen Lösung unterscheidet sich von derjenigen, die im Zusammenhang mit Figur 1 erläutert wurde dadurch, dass ein weiterer Regelkreis für den Schweißstrom additiv mit den bestehenden Regelkreisen verknüpft wird. Hierzu wird die in Figur 1 dargestellte Schaltung um den in Figur 3 aufgeführten Funktionsblock 27 ergänzt. Dieser besteht aus einem Funktionsgenerator, welcher eingangsseitig einen Wert für die "Amplitudenbalance" erhält, beispielsweise über ein Potentiometer. Die Schaltung besteht z.B. aus zwei Verstärkerschaltungen, die sich durch die Erzeugung gleicher Beträge, aber unterschiedlicher Vorzeichen auszeichnen. Die Umschaltung dieser Verstärker +1, -1 erfolgt abhängig von dem Ausgangssignal der im Zusammenhang mit Figur 1 erläuterten Aussteuerlogik 19, das ist diejenige Schaltung, die den Wechselrichter 12-13 in seinen entsprechenden Halbwellen ansteuert. Je nach derzeit vorhandener Halbwelle wird entweder der Ausgang des +1 Verstärkers oder der Ausgang des -1 Verstärkers an den Ausgang der Funktionsschaltung 27 gelegt, welcher mit dem Summationspunkt 22 des Regelkreises verknüpft ist. Je nach aktueller Halbwelle wird also das Ausgangssignal der Schaltung 27 vorzeichenrichtig in den Summationspunkt 22 eingespeist.

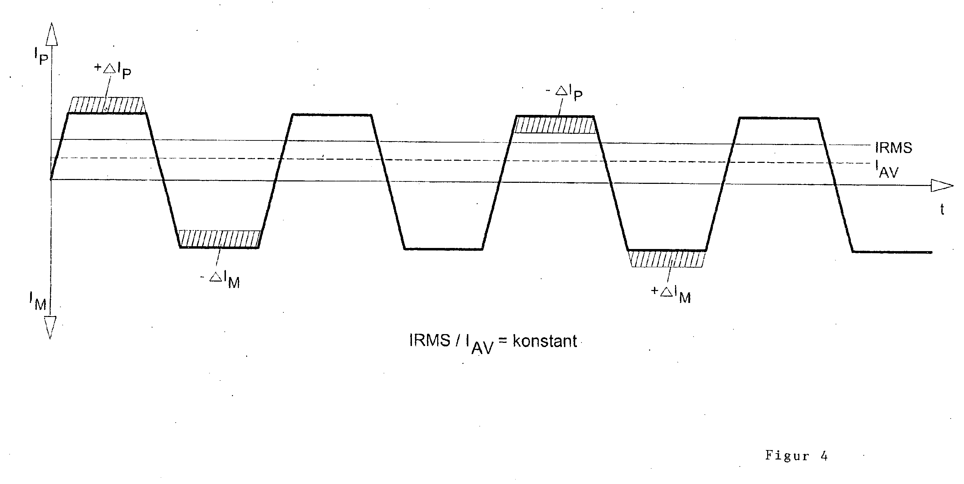

Die Funktion dieser Schaltung wird im Zusammenhang mit der Figur 4 nun näher erläutert.

Figur 4 zeigt den zeitlich trapezförmigen Verlauf des Schweißstromes. Die in Figur 4 dargestellten gestrichelten Bereiche stellen die Korrekturbeträge dar, die in den jeweiligen Halbwellen in Form eines Offsets auf den Amplitudenverlauf "aufgesattelt" werden. Wenn beispielsweise am Potentiometer "Amplitudenbalance" ein positiver Wert eingestellt wird, wird dieser als Korrekturbetrag $+\Delta I_P$ in den entsprechenden positiven Halbwellen vom +1 Verstärker der Schaltung 27 mit einem positiven Vorzeichen auf den Summationspunkt 22 gegeben, so dass sich eine entsprechende zusätzliche Fläche $+\Delta I_P$ ergibt. Umgekehrt wird in dem Bereich der negativen Halbwelle ein betragsmäßig gleicher Korrekturbetrag, jedoch mit dem Minuszeichen als $-\Delta I_M$ auf den Summationspunkt 22 gegeben, so dass sich eine entsprechende "negative Aufsattelung" im Bereich der nachfolgenden Halbwelle ergibt.

Wenn der Wert für die Amplitudenbalance vom Potentiometer auf den Betrag Null festgelegt ist, ergibt sich entsprechend dem Verlauf der dritten und vierten Halbwelle in Figur 4 keine Veränderung infolge einer Aufsattelung. Wenn, wie dies in Figur 4 anhand der fünften und sechsten Halbwelle des trapezförmigen Verlaufes dargestellt wird, ein negativer Wert für die Amplitudenbalance gewünscht wird, ergibt sich eine negative Aufsattelung $-\Delta I_P$ im Bereich der positiven Halbwelle und eine vorzeichenmäßig entsprechende positive Aufsattelung im Bereich der negativen Halbwelle ($+\Delta I_M$).

Dadurch, dass die erfindungsgemäß modifizierte Amplitudenbalanceregelung zusätzlich zu der bereits bei der bekannten Lösung realisierten Frequenz- bzw. Strombalanceausregelung hinzutritt, wird eine entsprechende erweiterte Funktionalität unter Konstanthaltung des Strommittelwertes erreicht.

**Patentansprüche**

1. Lichtbogenschweißgerät, insbesondere für WIG-Schweißprozesse, enthaltend folgende Elemente

   - einen netzspannungsgespeisten Gleichrichter (1),
   - einen über einen Zwischenkreis daran angeschlossenen Stromwandler, der über eine Steuereinrichtung getaktet ist,

- einen sekundärseitigen Gleichrichter dem ein Glättungsglied (7) und ein Freilaufkreis zugeordnet sind,

- einen steuerbaren Wechselrichter (12, 13), an dessen Ausgang der Schweißstrom ($i_2(t)$) den Schweißprozeß (15, 16) versorgt,

- einen die Steuereinrichtung taktenden Stromregelkreis (17), welchem der Schweißstrom ($i_1(t)$, $i_2(t)$) als Istwert und ein Sollwert zugeordnet sind, dessen zeitliches Profil von einer Stromformvorgabeschaltung (18-21) generierbar ist,

- eine Strom-Sollwertkorrektureinrichtung (23, 24, 25, 26, 27), welche dem Sollwert ($I_{Soll}$) eine erste Korrekturgröße ($I_{SollKorr1}$) additiv zuordnet, wobei infolge der ersten Korrekturgröße ($I_{SollKorr1}$) durch eine erste Korrektur ($\Delta F_1 + \Delta F_2$) der Amplitude des Schweißstromes ($i_1(t)$, $i_2(t)$) der Mittelwert des Schweißstromes ($i_1(t)$, $i_2(t)$) unabhängig von der Wechselrichterfrequenz des Schweißstromes konstant gehalten wird, **dadurch gekennzeichnet, dass** die Strom-Sollwertkorrektureinrichtung (23, 24, 25, 26, 27) dem Sollwert ($I_{Soll}$)eine zweite Korrekturgröße ($I_{SollKorr2}$) additiv zuordnet, wobei infolge der zweiten Korrekturgröße ($I_{SollKorr2}$) bei einer Variation der Amplitude des Schweißstromes ($i_1(t)$, $i_2(t)$) in Form jeweils zueinander inverser Korrekturbeträge ($+\Delta I_P$; $-\Delta I_M$) in aufeinander folgenden Halbwellen der Mittelwert des Schweißstromes ($i_1(t)$, $i_2(t)$) unabhängig von der Größe des Korrekturbetrages ($+\Delta I_P$; $-\Delta I_M$) konstant gehalten wird.

2. Lichtbogenschweißgerät nach Anspruch 1, **dadurch gekennzeichnet, dass** der Sollwert durch die erste Korrekturgröße ($I_{SollKorr1}$) um ein solches Maß angehoben wird, dass das Flächenintegral des Strom-Sollwertprofils mit demjenigen eines Rechteckstromverlaufs in Übereinstimmung gebracht wird, dessen Amplitude dem Sollwert entspricht.

3. Lichtbogenschweißgerät nach Anspruch 1 oder 2, **dadurch gekennzeichnet, dass** die erste Korrekturgröße ($I_{SollKorr1}$) aus einem Regelkreis (25) erzeugt wird, der als Sollwertvorgabe den Sollwert des Schweißstromes und als Istwert den mit einem Mittelwertbildner (26) erzeugten Mittelwert des Schweißstromes ($i_1(t)$ und/oder $i_2(t)$) erhält.

4. Lichtbogenschweißgerät nach Anspruch 2 oder 3, **dadurch gekennzeichnet, dass** der Mittelwertbildner (26) den arithmetischen Mittelwert IAV des Schweißstromes bildet.

5. Lichtbogenschweißgerät nach Anspruch 2 oder 3, **dadurch gekennzeichnet, dass** der Mittelwertbildner (26) den quadratischen Mittelwert des Schweißstromes IRMS bildet.

6. Lichtbogenschweißgerät nach einem der Ansprüche 3 bis 5, **dadurch gekennzeichnet, dass** als Eingangssignal des Mittelwertbildners (26) der Schweißstrom (i1(t)) vor dem Wechselrichter (12, 13) anliegt.

7. Lichtbogenschweißgerät nach einem der Ansprüche 3 bis 5, **dadurch gekennzeichnet, dass** als Eingangssignal des Strommittelwertbildners (26) der Schweißstrom ($i_2(t)$) hinter dem Wechselrichter (12, 13) anliegt.

8. Lichtbogenschweißgerät nach einem der vorherigen Ansprüche 1 bis 7, **dadurch gekennzeichnet, dass** mittels der Stromformvorgabeschaltung (18-21) die Frequenz und/oder die Balance des wechselstromförmigen Schweißstrom-Sollwertes vorgebbar ist.

9. Lichtbogenschweißgerät nach einem der vorherigen Ansprüche 1 bis 8, **dadurch gekennzeichnet, dass** zur Erzeugung der zweiten Korrekturgröße ein (($I_{SollKorr2}$) Funktionsgenerator (27) vorgesehen ist, welcher in Abhängigkeit von dem vorgewählten Korrekturbetrag ("Amplituden-Balance") den beiden Halbwellen des Stromverlaufs vorzeichenrichtig zugeordnet die zweite Korrekturgröße ($+\Delta I_P$; $-\Delta I_M$) liefert.

10. Lichtbogenschweißgerät nach Anspruch 9, **dadurch gekennzeichnet, dass** das Steuersignal des Funktionsgenerators (27) zur vorzeichenrichtigen Zuordnung der zweiten Korrekturgröße ($+\Delta I_P$; $-\Delta I_M$) die mit dem Ansteuersignal des Wechselrichters (12,13) synchronisiert werden gegeben wird.

11. Lichtbogenschweißgerät nach Anspruch 10, **dadurch gekennzeichnet, dass** das Ausgangssignal des Funktionsgenerators (27) zur Erzeugung der zweiten Korrekturgröße ($I_{SollKorr2}$) auf einen Summationspunkt (22) des Stromregelkreises gegeben wird, an welchem auch die erste Korrekturgröße ($I_{SollKorr1}$) anliegt.

12. Verfahren zum Lichtbogenschweißen, bei welchem die gleichgerichtete Netzspannung über einen Zwischenkreis einem Stromwandler, der über eine Steuereinrichtung getaktet ist, zugeführt wird, auf dessen Sekundärseite die gleichgerichtete und geglättete Spannung in einem steuerbaren Wechselrichter (12, 13) in eine den Schweißprozeß beaufschlagende Wechselspannung gewandelt wird, wobei der sekundärseitige Schweißstrom ($i_1(t)$, $i_2(t)$) einem die Steuereinrichtung taktenden Stromregelkreis (17) als Istwert zugeführt wird, und wobei der Stromregelkreis (17) einen hinsichtlich seines zeitlichen Profils sowie seiner Frequenz und seiner Balance einstellbaren Strom-Sollwert erhält, wobei dem Strom-Sollwert eine derartige erste Korrekturgröße

($I_{SollKorr1}$) additiv zugeordnet wird, dass infolge der ersten Korrekturgröße ($I_{SollKorr1}$) durch eine erste Korrektur ($\Delta F_1 + \Delta F_2$) der Amplitude des Schweißstromes ($i_1(t)$, $i_2(t)$) der Mittelwert des Schweißstromes ($i_1(t)$, $i_2(t)$) unabhängig von der Wechselrichterfrequenz des Schweißstromes konstant gehalten wird,
**dadurch gekennzeichnet, dass** dem Strom-Sollwert eine derartige zweite Korrekturgröße ($I_{SollKorr2}$) additiv zugeordnet wird, dass infolge der zweiten Korrekturgröße ($I_{SollKorr2}$) bei einer Variation der Amplitude des Schweißstromes ($i_1(t)$, $i_2(t)$) in Form jeweils zueinander inverser Korrekturbeträge ($+\Delta I_P$; $-\Delta I_M$) in aufeinander folgenden Halbwellen der Mittelwert des Schweißstromes ($i_1(t)$, $i_2(t)$) unabhängig von der Größe des Korrekturbetrages ($+\Delta I_P$; $-\Delta I_M$) konstant gehalten wird.

13. Verfahren nach Anspruch 12, **dadurch gekennzeichnet, dass** das Verfahren teilweise oder vollständig digital mit Hilfe eines Software-Algorithmus ausgeführt wird.

**Claims**

1. An arc-welding apparatus, particularly for TIG welding processes, containing the following elements

    - a mains-voltage fed inverter (1),
    - a current transformer connected thereto via an intermediate circuit, which is clocked by means of a control apparatus,
    - a secondary-side rectifier, to which a smoothing element (7) and a free-wheel circuit are assigned,
    - a controllable inverter (12, 13), at the output of which the welding current ($i_2(t)$) supplies the welding process (15, 16),
    - a current control loop (17) clocking the control apparatus, to which the welding current ($i_1(t)$, $i_2(t)$) as actual value and a setpoint value are supplied, the temporal profile of which can be generated by a current shaping preset circuit (18-21),
    - a current setpoint value correction apparatus (23, 24, 25, 26, 27), which additively assigns a first correction value ($I_{set_{corr1}}$) to the setpoint value ($I_{set}$), wherein as a consequence of the first correction value ($I_{set_{corr1}}$), the average value of the welding current ($i_1(t)$, $i_2(t)$) is kept constant by means of a first correction ($\Delta F_1 + \Delta F_2$) of the amplitude of the welding current ($i_1(t)$, $i_2(t)$) independently of the inverter frequency of the welding current, **characterised in that** the current setpoint value correction apparatus (23, 24, 25, 26, 27) additively assigns a second correction value ($I_{set_{corr2}}$) to the setpoint value ($I_{set}$),

wherein as a consequence of the second correction value ($I_{set_{corr2}}$), the average value of the welding current ($i_1(t)$, $i_2(t)$) is kept constant during a variation of the amplitude of the welding current ($i_1(t)$, $i_2(t)$) in the form of in each case mutually inverse correction amounts ($+\Delta I_P$; $-\Delta I_M$) in successive half waves independently of the size of the correction amount ($+\Delta I_P$; $-\Delta I_M$).

2. The arc-welding apparatus according to claim 1, **characterised in that** the setpoint value is increased by such a degree by the first correction value ($I_{set_{corr1}}$) that the surface integral of the current setpoint value profile is synchronised with that of a rectangular current curve, the amplitude of which corresponds to the setpoint value.

3. The arc-welding apparatus according to claim 1 or 2, **characterised in that** the first correction value ($I_{set_{corr1}}$) is generated from a control loop (25) which receives the setpoint value of the welding current as setpoint value preset and the average value of the welding current ($i_1(t)$ and/or $i_2(t)$) generated with an averaging unit (26) as actual value.

4. The arc-welding apparatus according to claim 2 or 3, **characterised in that** the averaging unit (26) forms the arithmetic mean IAV of the welding current.

5. The arc-welding apparatus according to claim 2 or 3, **characterised in that** the averaging unit (26) forms the root mean square IRMS of the welding current.

6. The arc-welding apparatus according to any one of claims 3 to 5, **characterised in that** the welding current ($i_1(t)$) upstream of the inverter (12, 13) is applied as input signal of the averaging unit (26).

7. The arc-welding apparatus according to any one of claims 3 to 5, **characterised in that** the welding current ($i_2(t)$) downstream of the inverter (12, 13) is applied as input signal of the current averaging unit (26).

8. The arc-welding apparatus according to any one of the preceding claims 1 to 7, **characterised in that** the frequency and/or the balance of the alternating-current-like welding current setpoint value can be predetermined by means of the current shaping preset circuit (18-21).

9. The arc-welding apparatus according to any one of the preceding claims 1 to 8, **characterised in that** a function generator (27) is provided for generating the second correction value ($I_{set_{corr2}}$), which function generator supplies the second correction value ($+\Delta I_P$; $-\Delta I_M$) as a function of the preselected correction amount ("amplitude balance") in a manner assigned to the two half waves of the current curve with the correct sign.

10. The arc-welding apparatus according to claim 9, **characterised in that** the control signal of the function generator (27) is given for the assignment with the correct sign of the second correction value ($+\Delta I_P$; $-\Delta I_M$) which is synchronised with the control signal of the inverter (12, 13).

11. The arc-welding apparatus according to claim 10, **characterised in that** the output signal of the function generator (27) is given for generating the second correction value ($I_{set_{corr2}}$) to a summation point (22) of the current control loop, at which the first correction value ($I_{set_{corr1}}$) is also applied.

12. A method for arc welding, in which the rectified mains voltage is supplied via an intermediate circuit to a current transformer which is clocked via a control apparatus, on the secondary side of which the rectified and smoothed voltage is converted in a controllable inverter (12, 13) into an AC voltage acting upon the welding process, wherein the secondary-side welding current ($i_1(t)$, $i_2(t)$) is supplied as actual value to a current control loop (17) which clocks the control apparatus, and wherein the current control loop (17) receives a current setpoint value which can be adjusted with respect to its temporal profile and also its frequency and its balance, wherein a first correction value ($I_{set_{corr1}}$) of this type is additively assigned to the current setpoint value, as a consequence of the first correction value ($I_{set_{corr1}}$), the average value of the welding current ($i_1(t)$, $i_2(t)$) is kept constant by means of a first correction ($\Delta F_1 + \Delta F_2$) of the amplitude of the welding current ($i_1(t)$, $i_2(t)$) independently of the inverter frequency of the welding current, **characterised in that** a second correction value ($I_{set_{corr2}}$) of this type is additively assigned to the current setpoint value, **in that** as a consequence of the second correction value ($I_{set_{corr2}}$), the average value of the welding current ($i_1(t)$, $i_2(t)$) is kept constant during a variation of the amplitude of the welding current ($i_1(t)$, $i_2(t)$) in the form of in each case mutually inverse correction amounts ($+\Delta I_P$; $-\Delta I_M$) in successive half waves independently of the size of the correction amount ($+\Delta I_P$; $-\Delta I_M$).

13. The method according to claim 12, **characterised in that** the method is executed partly or completely digitally with the aid of a software algorithm.

## Revendications

1. Appareil de soudure à l'arc électrique, notamment pour processus de soudure WIG, contenant les éléments suivants :

     - un redresseur (1) alimenté par la tension du réseau,
     - un transformateur de courant qui y est connecté par l'intermédiaire d'un circuit intermédiaire, qui est synchronisé par un dispositif de commande,
     - un redresseur du côté secondaire, auquel sont coordonnés un organe de lissage (7) et un circuit redresseur,
     - un onduleur (12,13) pouvant être commandé, à la sortie duquel le courant de soudure ($i_2(t)$) alimente le processus de soudure (15,16),
     - un circuit de régulation de courant (17) synchronisant le dispositif de commande, auquel le courant de soudure ($i_1(t)$), ($i_2(t)$) en tant que valeur effective et une valeur de consigne sont coordonnés, dont le profil temporel peut être généré par un circuit de prescription de forme de courant (18-21),
     - un dispositif de correction de valeur de consigne du courant (23,24,25,26,27), qui coordonne de manière additive à la valeur de consigne ($I_{soll}$) une première grandeur de correction ($Isoll_{korr1}$), dans lequel en conséquence de la première grandeur de correction ($Isoll_{korr1}$) par une première correction ($\Delta F1 + \Delta F2$) de l'amplitude du courant de soudure ($i_1(t)$, $i_2(t)$) la valeur moyenne du courant de soudure ($i_1(t)$, $i_2(t)$) est maintenue constante indépendamment de la fréquence d'onduleur du courant de soudure, **caractérisé en ce que** le dispositif de correction de valeur de consigne du courant (23,24,25,26,27) coordonne de manière additive la valeur de consigne ($I_{soll}$) à une deuxième grandeur de correction ($Isoll_{korr2}$), dans lequel en conséquence de la deuxième grandeur de correction ($Isoll_{korr2}$) en présence d'une variation de l'amplitude du courant de soudure ($i_1(t)$, $i_2(t)$) sous la forme de respectivement des valeurs de correction inverses l'une par rapport à l'autre ($+\Delta I_P$; $-\Delta I_M$) dans des demi-ondes successives, la valeur moyenne du courant de soudure ($i_1(t)$, $i_2(t)$) est maintenue constante indépendamment de la grandeur de la valeur de correction ($+\Delta I_P$; $-\Delta I_M$).

2. Appareil de soudure à l'arc électrique selon la revendication 1, **caractérisé en ce que** la valeur de consigne est majorée par la première grandeur de correction ($Isoll_{korr1}$) dans une proportion telle que l'intégralité de la surface du profil de valeur de consigne du courant soit amenée à concorder avec celle d'une courbe de courant à impulsions rectangulaires, dont l'amplitude correspond à la valeur de consigne.

**3.** Appareil de soudure à l'arc électrique selon la revendication 1 ou 2, **caractérisé en ce que** la première grandeur de correction (Isoll$_{korr1}$) est générée par un circuit de régulation (25), qui obtient comme prescription de valeur de consigne la valeur de consigne du courant de soudure et comme valeur effective la valeur moyenne du courant de soudure (i$_1$(t) et/ou i$_2$(t))générée avec un formateur de valeur moyenne (26).

**4.** Appareil de soudure à l'arc électrique selon la revendication 2 ou 3, **caractérisé en ce que** le formateur de valeur moyenne (26) forme la valeur moyenne arithmétique IAV du courant de soudure.

**5.** Appareil de soudure à l'arc électrique selon la revendication 2 ou 3, **caractérisé en ce que** le formateur de valeur moyenne (26) forme la valeur moyenne quadratique du courant de soudure IRMS.

**6.** Appareil de soudure à l'arc électrique selon une des revendications 3 à 5, **caractérisé en ce que** comme signal d'entrée du formateur de valeur moyenne (26), le courant de soudure (i$_1$(t)) est appliqué avant l'onduleur (12,13).

**7.** Appareil de soudure à l'arc électrique selon une des revendications 3 à 5, **caractérisé en ce que** comme signal d'entrée du formateur de valeur moyenne du courant (26) le courant de soudure (i$_2$(t)) est appliqué après l'onduleur (12,13).

**8.** Appareil de soudure à l'arc électrique selon une des revendications précédentes 1 à 7, **caractérisé en ce que** au moyen du circuit de prescription de forme de courant (18-21) la fréquence et/ou l'équilibrage de la valeur de consigne du courant de consigne alternatif peuvent être prescrits.

**9.** Appareil de soudure à l'arc électrique selon une des revendications précédente 1 à 8, **caractérisé en ce que** pour générer la deuxième grandeur de correction (Isoll$_{korr2}$) un générateur de fonction (27) est prévu, lequel délivre en fonction de la valeur de correction présélectionnée (« équilibrage d'amplitudes ») la deuxième grandeur de correction (+$\Delta$I$_P$ ; -$\Delta$I$_M$) avec une affectation de signe correct aux deux demi-ondes de la courbe de courant.

**10.** Appareil de soudure à l'arc électrique selon la revendication 9, **caractérisé en ce que** le signal de commande du générateur de fonction (27) est donné à des fins d'affectation de signe correct de la deuxième grandeur de correction (+$\Delta$I$_P$ ; -$\Delta$I$_M$), qui est synchronisée avec le signal de pilotage de l'onduleur (12,13).

**11.** Appareil de soudure à l'arc électrique selon la revendication 10, **caractérisé en ce que** le signal de sortie du générateur de fonction (27) est donné à des fins de génération de la deuxième grandeur de correction (Isoll$_{korr2}$) sur un point de sommation (22) du circuit de régulation de courant, auquel est appliqué la première grandeur de correction (Isoll$_{korr1}$).

**12.** Procédé de soudure à l'arc électrique, dans lequel la tension du secteur redressée est introduite via un circuit intermédiaire dans un transformateur de courant, qui est synchronisé par l'intermédiaire d'un dispositif de commande, sur le côté secondaire duquel la tension lissée et redressée est convertie dans un onduleur pouvant être commandée (12,13) en une tension alternative sollicitant le processus de soudure, dans lequel le courant de soudure du côté secondaire (i$_1$(t)), i$_2$(t)) est introduit en tant que valeur effective dans un circuit de régulation de courant (17) synchronisant le dispositif de commande, et dans lequel le circuit de régulation de courant (17) obtient une valeur de consigne de courant pouvant être réglée en ce qui concerne son profil temporel ainsi que sa fréquence et son équilibrage, dans lequel la valeur de consigne du courant est coordonnée de manière additive à une première grandeur de correction (Isoll$_{korr1}$) de telle sorte que, en conséquence de la première grandeur de correction (Isoll$_{korr1}$) par une première correction ($\Delta$F1+$\Delta$F2) de l'amplitude du courant de soudure (i$_1$(t)), i$_2$(t)) la valeur moyenne du courant de soudure (i$_1$(t), i$_2$(t))est maintenue constante indépendamment de la fréquence d'onduleur du courant de soudure, **caractérisé en ce** la valeur de consigne du courant est coordonnée de manière additive à une deuxième grandeur de correction (Isoll$_{korr2}$), de telle sorte que en conséquence de la deuxième grandeur de correction (Isoll$_{korr2}$) en présence d'une variation de l'amplitude du courant de soudure (i$_1$(t), i$_2$(t)) sous la forme de respectivement des valeurs de correction inverses l'une par rapport à l'autre (+$\Delta$I$_P$ ; -$\Delta$I$_M$) dans des demi-ondes successives, la valeur moyenne du courant de soudure (i$_1$(t), i$_2$(t)) est maintenue constante indépendamment de la grandeur de la valeur de correction (+$\Delta$I$_P$ ; -$\Delta$I$_M$).

**13.** Procédé selon la revendication 12, **caractérisé en ce que** le procédé peut être mis en oeuvre partiellement ou en totalité à l'aide d'un algorithme logiciel.

Figur 1
Stand der Technik

EP 1 880 788 B1

Multiplikation

Netz

Isoll

IKorr

PI
Stromregler
IAV/IRMS

25

24

IsollKorr

23

Imod

22

PI
Stromregler
i(t)

17

1

Inverter

3-6

21

A

D

i1(t)

i2(t)

AC-Frequenz-Generator

AC-Frequenz

AC-Balance

18

20

AC-Stromform

7

i1(t)

Aussteuerlogik

19

12-13

AC-Wechselrichter

i2(t)

IAV
IRMS

$$I_{AV} = \frac{1}{T} \int i_{(t)} * dt$$

$$IRMS = \sqrt{\frac{1}{T} \int i_{(t)}^2 * dt}$$

$$i_{(t)} = i1_{(t)} \text{ oder } i2_{(t)}$$

26

16

15

9

$i_{(t)}$

Isoll

IRMS

$I_{AV}$

t

2a

$i_{(t)}$

Isoll$_{Korr}$ $= \triangle F_1 + \triangle F_2$

$\triangle F_1$

$\triangle F_2$

IRMS

$I_{AV}$

t

2b

Isoll$_{Korr}$ $= \triangle F_1 + \triangle F_2$

$i_{(t)}$

$\triangle F_1$

$\triangle F_2$

IRMS

$I_{AV}$

t

2c

Figur 2

Stand der Technik

Figur 3

IRMS / $I_{AV}$ = konstant

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4023419 C2

- EP 1142665 B1